Europäisches Patentamt

European Patent Office

Office européen des brevets

(11) Veröffentlichungsnummer: **0 284 714**
**A2**

(12) **EUROPÄISCHE PATENTANMELDUNG**

(21) Anmeldenummer: 88100431.1

(51) Int. Cl.4: **B32B 7/08**

(22) Anmeldetag: 14.01.88

(30) Priorität: 28.03.87 DE 3710377

(43) Veröffentlichungstag der Anmeldung:
05.10.88 Patentblatt 88/40

(84) Benannte Vertragsstaaten:
AT BE CH DE ES FR GB GR IT LI LU NL SE

(71) Anmelder: Ewald Dörken GmbH & Co. KG
Wetterstrasse 58
D-5804 Herdecke(DE)

(72) Erfinder: Dipl.Ing. Klaus Urban
Beethovenweg 8
D-5804 Herdecke(DE)
Erfinder: Dipl. Ing. Dieter Jablonka
Neue Str. 11
D-5804 Herdecke(DE)

(74) Vertreter: Köchling, Conrad-Joachim
Patentanwälte Dipl.-Ing. Conrad Köchling,
Dipl.-Ing. Conrad-Joachim Köchling Fleyer
Strasse 135
D-5800 Hagen 1(DE)

(54) Verbundbahn.

(57) Um eine Verbundbahn aus mindestens zwei Kunststofffolien zu schaffen, die aufgrund ihrer chemischen Zusammensetzung nur mittelbar miteinander dauerhaft verbindbar sind, wobei die einzelnen Kunststoffolien durch Haftvermittler verbunden sind, die weitestgehend unempfindlich gegen Lösungsmittel ist und deren Verbund auch dann erhalten bleibt, wenn Lösungsmittel an die Trennstelle der miteinander verbundenen Folien gelangt, wird vorgeschlagen, daß als Haftvermittler ein Vlies (3) zwischen die miteinander zu verbindenden Folien (1,2) eingebracht ist, dessen Fasern teilweise im Material der einen und teilweise im Material der anderen Folie eingebettet sind.

Fig.1

## Verbundbahn

Die Erfindung betrifft eine Verbundbahn aus mindestens zwei Kunststoffolien, die aufgrund ihrer chemischen Zusammensetzung nur mittelbar miteinander dauerhaft verbindbar sind, insbesondere PE-PA-Verbundbahnen, wobei die einzelnen Kunststoffolien durch Haftvermittler verbunden sind, insbesondere als Abdichtung für Mülldeponien oder dergleichen.

Derartige Verbundbahnen sind beispielsweise durch die DE-OS 35 18 747 bekannt.

Solche Verbundbahnen werden als Kunststoffdichtungsbahnen, vorallem für Anlagen zur Lagerung von wassergefährdenden Stoffen, insbesondere für Mülldeponien, verwendet.

Die Dicke derartiger Kunststoffdichtungsbahnen beträgt üblicherweise mindestens 2 mm und mehr. Um den Zutritt von Sickerwasser auf Deponien in den Untergrund zu verhindern oder auf ein Mindestmaß zu beschränken, werden derartige Kunststoffdichtungsbahnen überlappend verlegt und großflächig miteinander verschweißt. Sie bestehen beispielsweise aus Polyvinylchlorid, Polyäthylen, chlorierten Polyäthylenen, Äthylen-Propylen-Terpolymeren.

Diese Aufzählung ist nicht beschränkend, sondern nur beispielsweise gemeint. Besondere Gefahr für die Verunreinigung des Grundwassers besteht durch die Permeation von Kohlenwasserstoffen, chlorierten Kohlenwasserstoffen oder deren Dämpfen. Auch diese Stoffe sind nur beispielsweise aufgezählt. Grundsätzlich sind derartige Bahnen gegenüber Lösungsmitteln empfindlich, weil beispielsweise die außenliegenden Folien mit den dazwischenliegenden Folien über chemische Haftvermittler verbunden werden müssen, welche aber durch den Permeenten angelöst und gegebenenfalls aufgelöst werden können.

Der Verbund ist dann aufgelöst, so daß die Verbundbahn ihrer Funktion nicht mehr nachkommen kann.

Ausgehend von diesem Stand der Technik liegt der Erfindung die Aufgabe zugrunde, eine Verbundbahn zu schaffen, die weitestgehend unempfindlich gegen Lösungsmittel ist und deren Verbund auch dann erhalten bleibt, wenn Lösungsmittel an die Trennstelle der miteinander verbundenen Folien gelangt.

Zur Lösung dieser Aufgabe schlägt die Erfindung vor, daß als Haftvermittler ein Vlies oder Gewebe oder Gelege oder Gewirke zwischen die miteinander zu verbindenden Folien eingebracht ist, dessen Fasern teilweise im Material der einen und teilweise im Material der anderen Folie eingebettet sind. Dadurch daß anstelle der bisher üblichen chemischen Haftvermittler ein Vlies oder dergleichen zwischen die Kunststoffolie eingebracht wird, welches sowohl in die Oberfläche der einen als auch der anderen Kunststoffolie eingedrückt ist, wird eine mechanische Verklammerung der Fasern des Vlieses oder dergleichen mit dem Kunststoffmaterial erreicht, so daß ein mechanischer Verbund erreicht wird. Dieser mechanische Verbund ist praktisch völlig unempfindlich gegen Lösungsmittel, so daß dieser Verbund auch dann aufrechterhalten bleibt, wenn Lösungsmittel durch eine der Folien zur Trennstelle hin durchdringt.

Das Vlies oder dergleichen kann Fasern aus Metall-, Glas-oder anderem geeigneten Material umfassen oder ausschließlich aus solchen bestehen.

Vorzugsweise ist vorgesehen, daß ein Wirrfaservlies mit den zu verbindenden Folien verbunden ist.

In Weiterbildung wird vorgeschlagen, daß das Vlies aus Kunststoffasern besteht.

Bevorzugt ist vorgesehen, daß mindestens ein Teil der Kunststoffasern des Vlieses lösungsmittelbeständig sind.

Desweiteren ist eine bevorzugte Lösung, daß das Vlies aus PE-und PA-Fasern besteht.

Insbesondere ist erfindungsgemäß vorgesehen, daß das Vlies beständig gegen alle aggressiven Medien, zum Beispiel Säuren, Laugen und/oder Lösungsmittel ist, so daß das Vlies selbst sich nicht durch Einwirkung dieser Medien zersetzt. Insbesondere beim Einsatz von PE-PA-Verbundfolien ist der bisher beobachtete Effekt der, daß PE zwar durchlässig für bestimmte Medien, insbesondere Lösungsmittel oder Lösungsmitteldämpfe ist, aber grundsätzlich beständig gegen diese Materialien ist. Die zwischen zwei PE-Folien angeordnete PA-Folie weist eine höhere Dichtigkeit gegen Aromaten und auch gegen Kohlenwasserstoffe und mindestens annähernd gleiche mechanische Eigenschaften wie die außenliegende PE-Folie auf, so daß diese das Durchtreten von Lösungsmitteln oder dergleichen Schadstoffen verhindert. Der für die Funktion wesentliche Verbund der Folien wird durch den Vorschlag vorliegender Erfindung sichergestellt. Alternativ oder auch in Kombination mit dem vorhergehenden Vorschlag besteht ein weiterer Lösungsvorschlag für die erfindungsgemäße Aufgabe darin, daß als Haftvermittler mindestens eine weitere Kunststoffolie zwischen die zu verbindenden Folien eingefügt ist, die aus einer Mischung der Materialien der beiden miteinander zu verbindenden Folien besteht.

Auch auf diese Weise ist es möglich, den Verbund zwischen den miteinander zu verbindenden Folien sicherzustellen, weil die Bestandteile der Zwischenfolie, die mit dem chemischen Material der einen Folien identisch sind, mit dieser Folie unmittelbar eine Bindung eingehen können, während die anderen Bestandteile, die artgleich mit den Bestandteilen der anderen Kunststoffolie sind, mit letzterer eine feste Verbindung unmittelbar eingehen können.

Bevorzugt ist dabei vorgesehen, daß mehrere Kunststoffolien als Haftvermittler zwischen die zu verbindenden Folien eingefügt sind, deren Materialmischung von der einen zur anderen Folie hin abnehmende Anteile der einen und zunehmende Anteile der anderen aufweist.

Beispielsweise kann eine PE-Folie mit einer PA-Folie dadurch verbunden werden, daß zunächst eine Folie aus einem Mischwerkstoff von sechzig Prozent PE und vierzig Prozent PA mit der PE-Folie verbunden wird, mit dieser Folie wiederum eine Mischfolie aus vierzig Prozent PE und sechzig Prozent PA, mit letzterer Folie wiederum die PA-Folie, so daß insgesamt ein haltbarer Verbund erzeugt wird. Auf diese Weise wird die zum Beispiel höhere Dichtigkeit gegen Aromaten und gegen Kohlenwasserstoffe aufweisende PA-Folie mit der außenliegenden PE-Folie verbunden, wobei sich auf der anderen Seite der PA-Folie der umgekehrte Aufbau wiederum anschließt. Die gewünschte Wirkung, insbesondere für Kunststoffdichtungsbahnen für Anlagen zur Lagerung von wassergefährdenden Stoffen, insbesondere für Mülldeponien, ist damit erreicht.

Gegenstand der Erfindung ist weiterhin ein Verfahren zur Herstellung einer Verbundbahn gemäß Ansprüchen 1 bis 5, welches sich dadurch auszeichnet, daß zunächst die eine Kunststoffolie extrudiert wird, in deren noch heiße Masse mindestens einseitig ein Vlies eingepreßt wird, so daß ein Teil der Fasern des Vlieses eine mechanische Verklammerung mit der Kunststoffolie eingehen, und daß dann auf die mit Vlies belegte Schicht die andere Kunststoffolie extrudiert und in diese eingepreßt wird.

Die Herstellung kann in der Weise erfolgen, daß die Verbindung des Vlieses mit einer Kunststoffolie beim Extrudieren der Kunststoffolie erfolgt, wobei das Vlies dem Extrudat zugeführt und mittels Anpreßwalzen oder dergleichen in das Extrudat eingepreßt wird. Dieser Aufbau läßt sich vielfach wiederholen, indem das Ergebnis des ersten Verbindungsvorganges jeweils wieder der Extrusionsanlage zugeführt wird, mit der eine weitere Kunststoffolie aufgetragen wird, die wiederum mit der noch offenen Vliesfläche verbunden wird.

Auf diese Weise ist kostengünstig und einfach die gewünschte Verbundbahn herzustellen.

Zwei Ausführungsbeispiele der Erfindung sind in der Zeichnung schematisch dargestellt und im folgenden näher erläutert.

Es zeigt:

Fig. 1 eine Verbundbahn gemäß vorliegender Erfindung;

Fig. 2 eine weitere Verbundbahn gemäß vorliegender Erfindung.

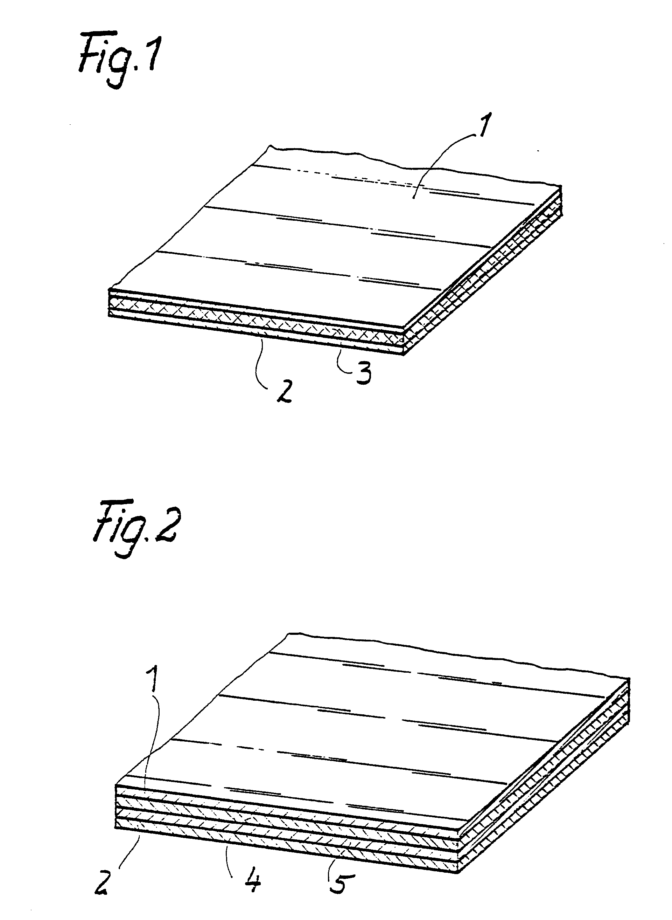

Die Verbundbahn gemäß Figur 1 besteht aus zwei Kunststoffolien 1,2, die aufgrund ihrer chemischen Zusammensetzung nur mittelbar miteinander dauerhaft verbindbar sind. Gemäß der Erfindung ist als Haftvermittler zwischen die beiden Kunststoffolien 1,2 ein Wirrfaservlies 3 eingebracht, welches aus Kunst stoffasern, insbesondere lösungsmittelbeständigen Kunststoffasern besteht. Dabei ist vorzugsweise das Vlies 3 aus einer Mischung von Kunststoffasern gebildet, deren chemische Zusammensetzung der Folie 1 und der Folie 2 entspricht.

Die Fasern des Vlieses 3 sind durch einen Preßvorgang jeweils in das Material der Folie 1 bzw. 2 eingedrückt und mit diesen mechanisch verbunden.

Eine parallele Lösung ist in der Figur 2 dargestellt. Auch dort ist wiederum eine Folie 1 mit einer Folie 2 zu verbinden, wobei zwischen diese Kunststoffolien 1,2 weitere Kunststoffolien 4,5 eingefügt sind. Beide Folien 4 + 5 bestehen aus einer Mischung von Materialien der Folien 1 und 2. Beispielsweise besteht die Folie 1 aus PE, die Folie 4 aus einer Mischung von sechzig Prozent PE und vierzig Prozent PA, die Folie 5 aus einer Mischung von vierzig Prozent PE und sechzig Prozent PA und die Folie 2 schließlich aus PA-Material. Auf diese Weise wird eine unmittelbare Verbindung zwischen den Folien 1,4,5,2 hergestellt, der sich unter den bei Mülldeponien beispielsweise auftretenden Bedingungen nicht löst.

Die Erfindung ist nicht auf die Ausführungsbeispiele beschränkt, sondern im Rahmen der Offenbarung vielfach variabel.

**Ansprüche**

1. Verbundbahn aus mindestens zwei Kunststoffolien bzw. -schichten, die aufgrund ihrer chemischen Zusammensetzung nur mittelbar miteinander dauerhaft verbindbar sind, insbesondere PE-PA-Verbundbahnen, wobei die einzelnen Kunststoffolien durch Haftvermittler verbunden sind, insbesondere als Abdichtung für Mülldeponien oder dergleichen, dadurch gekennzeichnet, daß als Haftvermittler ein Vlies (3) oder Gewebe und/oder Gewirke oder Kombinationen derselben zwischen die miteinander zu verbindenden Folien (1,2) eingebracht ist, dessen Fasern teilweise im Material der einen und teilweise im Material der anderen Folie eingebettet sind.

2. Verbundbahn nach Anspruch 1, dadurch gekennzeichnet, daß ein Wirrfaservlies (3) mit den zu verbindenden Folien (1,2) verbunden ist.

3. Verbundbahn nach Anspruch 1 oder 2, dadurch gekennzeichnet, daß das Vlies (3) aus Kunststoffasern besteht.

4. Verbundbahn nach Anspruch 1 bis 3, dadurch gekennzeichnet, daß mindestens ein Teil der Kunststoffasern des Vlieses (3) lösungsmittelbeständig ist.

5. Verbundbahn nach Anspruch 1 bis 4, dadurch gekennzeichnet, daß das Vlies (3) aus PE- und PA-Fasern besteht.

6. Verbundbahn aus mindestens zwei Kunststoffolien, die aufgrund ihrer chemischen Zusammensetzung nur mittelbar miteinander dauerhaft verbindbar sind, insbesondere PE-PA-Verbundbahnen, wobei die einzelnen Kunststoffolien durch Haftvermittler verbunden sind, insbesondere als Abdichtung für Mülldeponien oder dergleichen, dadurch gekennzeichnet, daß als Haftvermittler mindestens eine weitere Kunststoffolie (4,5) zwischen die zu verbindenden Folien (1,2) eingefügt ist, die aus einer Mischung der Materialien der beiden miteinander zu verbindenden Folien (1,2) besteht.

7. Verbundbahn nach Anspruch 6, dadurch gekennzeichnet, daß mehrere Kunststoffolien (4,5) als Haftvermittler zwischen die zu verbindenden Folien (1,2) eingefügt sind, deren Materialmischung von der einen zur anderen Folie hin abnehmende Anteile der einen und zunehmende Anteile der anderen aufweist.

8. Verfahren zur Herstellung einer Verbundbahn nach einem der Ansprüche 1 bis 5, dadurch gekennzeichnet, daß zunächst die eine Kunststoffolie (1) extrudiert wird, in deren noch heiße Masse mindestens einseitig ein Vlies (3) eingepreßt wird, so daß ein Teil der Fasern des Vlieses (3) eine mechanische Verklammerung mit der Kunststoffolie (1) eingehen, und daß dann auf die mit Vlies (3) belegte Schicht die andere Kunststoffolie (2) extrudiert und in diese eingepreßt wird.

*Fig.1*

*Fig.2*